# EUROPEAN PATENT APPLICATION

(11) **EP 4 617 907 A1**
(43) Date of publication of application: **17.09.2025**
(21) Application number: 25163610.6
(22) Date of filing: 13.03.2025
(51) Int. Cl.: G06F 16/3329, G06F 16/901, G06F 16/9032

(54) **ENTERPRISE KNOWLEDGE GRAPHS FOR ENHANCED PROMPTS TO GENERATIVE ARTIFICIAL INTELLIGENCE (AI) SYSTEM**

(30) Priority: 14.03.2024 US 202418605364
(71) Applicant: Microsoft Technology Licensing, LLC, Redmond, WA 98052 (US)
(72) Inventor: TRIPATHI, BEETHIKA, Redmond, 98052 (US); ANAND, RASHI, Redmond, 98052 (US)
(74) Representative: CMS Cameron McKenna Nabarro Olswang LLP

(57) **Abstract**

A user-specific knowledge-based graph (KG) is generated from enterprise data corresponding to a user. The user-specific KG is stored in a data store. A query processing system receives a user query that is to be used in prompting a large language model (LLM) in an LLM service. The query processing system identifies portions of the KGs in the data store that relate to the query. A prompt generator generates a prompt to the LLM service using the identified portions of the KG and the query. A response processor receives a response from the LLM service and generates a response to the query based on the response received from the LLM service.

## Description

### BACKGROUND

Computing systems are currently in wide use. Some computing systems host services, such as generative AI services (which may be embodied as large language models - language model having tens of billions to hundreds of billions of parameters). The generative AI systems may perform different functions. For example, the generative AI system may be chat systems, question answering systems, search engines, among others. When a user engages such a computing system, the user often provides a prompt to the generative AI system and receives a response to that prompt.

Users also often engage with enterprise systems. Enterprise systems can include things such as electronic mail (email) systems, document storage systems, contact systems (which store contact information), meeting systems (which are used to schedule and conduct meetings), scheduling or calendar systems, presentation systems (which can be used to generate presentations, such as slide presentations, etc.), other productivity systems, etc. User-specific data in an enterprise computing system can be quite dynamic, in that it changes frequently.

Such enterprise systems also normally have an enterprise search system. The enterprise search system allows a user to submit queries in order to locate information, identify documents, answer questions, etc.

The discussion above is merely provided for general background information and is not intended to be used as an aid in determining the scope of the claimed subject matter.

### SUMMARY

A user-specific knowledge-based graph (KG) is generated from enterprise data corresponding to a user. The user-specific KG is stored in a data store. A query processing system receives a user query that is to be used in prompting a large language model (LLM) in an LLM service. The query processing system identifies portions of the KGs in the data store that relate to the query. A prompt generator generates a prompt to the LLM service using the identified portions of the KG and the query. A response processor receives a response from the LLM service and generates a response to the query based on the response received from the LLM service.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a block diagram of one example of a computing system architecture.
FIGS. 2A and 2B (collectively referred to herein as FIG. 2) show a flow diagram illustrating one example of the operation of the computing system architecture shown in FIG. 1.
FIG. 3 is a flow diagram illustrating one example of generating a user-specific KG.
FIG. 4 is an example of a prompt used to generate a semantic representation of an entity.
FIG. 5 shows an example of identifying subgraphs and using those subgraphs to prompt an LLM service to answer a query.
FIG. 6 shows one example of the computing system architecture shown in FIG. 1, deployed in a remote server architecture.
FIG. 7 is a block diagram of one example of a computing environment that can be used in architectures and systems described in other figures.

### DETAILED DESCRIPTION

As discussed above, large language models (LLMs) and other generative AI systems are currently available for use by users. Such systems often understand language very well. However, such systems have much less ability to understand concepts that are buried within data. Therefore, when a user submits a query to an LLM, the inability to understand buried concepts within data often leads to the generation or irrelevant or factually incorrect responses, thus rendering the LLMs unreliable in responding to certain types of queries. One reason for this is that the effectiveness and reliability of LLMs is often directly related to training. If an LLM is trained on a specific set of data, the LLM is often much more accurate and reliable in responding to queries about that data. However, if an LLM is not trained on the specific set of data, then the LLM is much less accurate and much less reliable in responding to queries about that data.

Also, as discussed above, many users interact with enterprise systems. User-specific information in the enterprise system is heterogeneous and dynamic in that such information keeps evolving at a relatively rapid rate. Thus, in order for an LLM to be accurate and reliable in responding to queries about that user-specific enterprise information, the LLM must be retrained frequently based upon the continuously evolving user-specific enterprise data. Training LLMs is expensive, and thus repeatedly training LLMs on dynamically changing information can be very expensive. Similarly, because of the rapidly changing nature of user-specific enterprise data, even after an LLM is trained on such data, the training data is likely stale because the user-specific enterprise data has already evolved since the LLM was trained.

Further, user-specific enterprise data often contains confidential information which may be highly regulated. Therefore, training an LLM with confidential enterprise data increases the likelihood that such data may be leaked into a non-confidential environment, and can also render the underlying LLMs non-compliant (because they were trained with confidential information). These limitations thus seriously impact the accuracy and reliability of using LLMs in an enterprise domain for applications such as question answering, chatbot, search systems, etc.

The present description thus describes a system in which user-specific knowledge graphs (KGs) are generated using enterprise data for each user. The knowledge graphs are stored in a data store. When a user then submits a query to a generative AI service (such as an LLM service), the user-specific KGs are extracted from the data store and submitted in a prompt, along with the query, to the LLM service. This greatly enhances the model's ability to understand relationships between underlying concepts and entities. This also leads to much more accurate predictions and creative outputs from the LLM, enhancing applications such as search engines, question answering systems, chatbots, etc.

Further, generating KGs is inexpensive when compared to the cost of training an LLM. Thus, the accuracy and reliability of the LLM is increased without the expense of retraining the LLM. Further, because the KGs may be maintained as user-specific KGs, this mitigates the problem of leaking information into non-confidential environments.

More specifically, user-specific KGs are intermittently generated and updated for users in an enterprise. The user-specific KGs are stored in a data store. When the user submits a query to an LLM service, a graph fetching system retrieves relevant portions of the user-specific KGs corresponding to the user and submits those relevant portions along with the query as a prompt to the LLM service. The LLM service generates a response to the prompt which can be provided back to the user in response to the user's query. The present discussion also describes different ways of generating the user-specific KGs, and different ways of generating a prompt to an LLM service using the user-specific KGs.

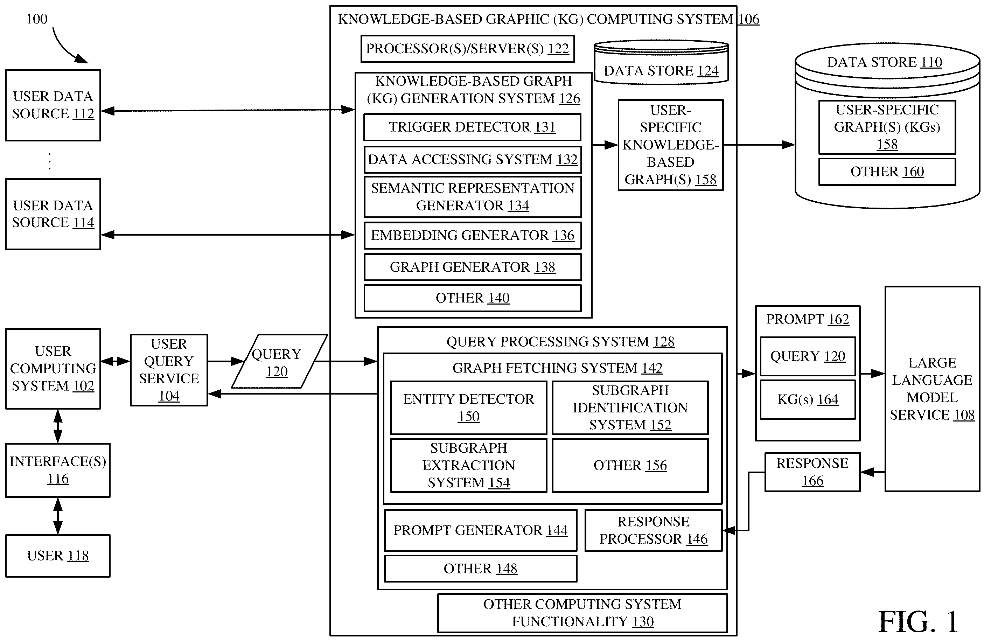

FIG. 1 is a block diagram of one example of a computing system architecture 100. Architecture 100 includes user computing system 102, user query service 104, knowledge-based graph (KG) computing system 106, large language model (LLM) service 108, data store 110 and user data sources 112-114. In the example shown in FIG. 1, user computing system 102 generates one or more user interfaces 116 for interaction by user 118. User 118 can interact with interfaces 116 to submit a query 120 through user query service 104 to LLM service 108.

KG computing system 106 includes one or more processors or servers 122, data store 124, knowledge-based graph (KG) generation system 126, query processing system 128, and any of a wide variety of other computing system functionality 130. KG generation system 126 can include trigger detector 131, data accessing system 132, semantic representation generator 134, embedding generator 136, graph generator 138, and other items 140. Query processing system 128 can include graph fetching system 142, prompt generator 144, response processor 146, and other items 148. Graph fetching system 142 can include entity detector 150, subgraph identification system 152, subgraph extraction system 154, and other items 156. Data store 110 can include user-specific graphs (KGs) 158 and other items 160. Before describing the overall operation of architecture 100, a description of some of the items in architecture 100, and their operation will first be provided.

User data sources 112-114 can be any of a wide variety of different types of data sources that store user-specific, enterprise data for user 118. In one example, the user data sources 112-114 are part of an enterprise computing system and can include such things as an electronic mail (email) system, a meeting system, a chat system, a document generation system (such as a word processing system, a spreadsheet system, a presentation generation system, etc.), a user contact store, etc. Thus, user data sources 112-114 may include email messages, documents, contact records, chat messaging threads, meting data (such as meeting transcripts, attendees, organizers, topics, etc.), among a wide variety of other types of data.

KG graph generation system 126 accesses data in user data sources 112 -114 and generates user-specific knowledge-based graphs (KGs) 158 based on the user data and stores those as user-specific graphs 158 in data store 110. In one example, trigger detector 131 detects a rigger indicating that KG generation system 126 should access user data from user data sources 112-114 to generate and/or update user-specific KGs 158 for this particular user. Trigger detector 131 may be a time-based trigger, so that the user's KGs are updated intermittently based on time. Trigger detector 131 may detect when user 118 logs into content system (such as the user's email system, or other system) and use that as a trigger to access the data that user 118 has access to in that content system to update the KGs 58 for the user. Other triggers can be detected by trigger detector 131 as well.

Once triggered, data accessing system 132 accesses data from user data sources 112-114 for KG generation. In one example, data accessing system 132 only accesses new or modified data that has been added or modified since the last time KGs were generated for this user. Semantic representation generator 134 generates a semantic representation based on the accessed items of data. In one example, semantic representation generator 134 processes the items of information to generate semantic triples from the sources of content or data. The semantic triples may, for example, be in the form of subject-predicate-obj ect where the subject is an entity being described in the item of information (in the different sentences extracted from an email, from meeting data, from chat threads, etc.), the predicate is a property of the subject that is being described, and the object is the value of that property. [In one example, semantic representation generator 134 may, itself, be an LLM trained to generate the semantic triples (or another semantic representation) corresponding to different entities identified in the items of data in user data sources 112-114.]

Embedding generator 136 generates an embedding corresponding to each of the content items. The embeddings generated by embedding generator 136 represent nodes in the graph while the edges in the graph are generated using the semantic representations generated by semantic representation generator 134. Any of a wide variety of different types of embedding generators can be used, such as matrix factorization algorithms, random walk algorithms, deep learning algorithms, FastRP algorithms (fast random projection algorithms), etc. The content embeddings can be generated at the entity level so that the graph represents relations between the entities. In another example, the content embeddings are generated at the word level with the semantic representations being used to generate relations between the words. Graph generator 138 then uses the embeddings generated by embedding generator 136 as nodes in the graph. The nodes may be heterogeneous having diverse node types (e.g., emails, meetings, documents, contacts, etc.) and edges (e.g., sender, receiver, organizer, modifier, etc.). KG generation system 126 outputs the user-specific knowledge-based graphs for storage in data store 110. In one example, data store 110 is a compliant data store that stores user-specific data for an enterprise in a secure way.

Query processing system 128 receives a query 120 that may be output by user query service 104 in response to user 118 interacting with interfaces 110 to generate query 120. Graph fetching system 142 processes the query to identify portions of the user-specific graphs 158 for this user that are relevant to the query. Thus, entity detector 150 detects entities in query 120. An entity may correspond to a noun or noun phrase. Based on the detected entities, subgraph identification system 152 queries data store 110 to identify subgraphs of the user-specific graphs 158 for this user 118 that are relevant to the detected entities. Based upon the identified subgraphs, subgraph extraction system 154 extracts those subgraphs from user-specific graphs 158 and provides a representation of the query, along with the subgraphs, to prompt generator 144. Prompt generator 144 generates prompt 162 for submission to LLM service 108. Prompt 162 can include a representation of query 120, along with the subgraphs 164 extracted by subgraph extraction system 154. The subgraphs 164 can be provided as context along with the representation of query 120. It will be noted that prompt generator 144 can provide prompt 162 as a complex prompt, or as a series of chained prompts. LLM service 108 processes prompt 162 and generates a response 166. The response 166 can be processed by response processor 146 and provided back to the user computing system 102 through user query service 104 in response to query 120.

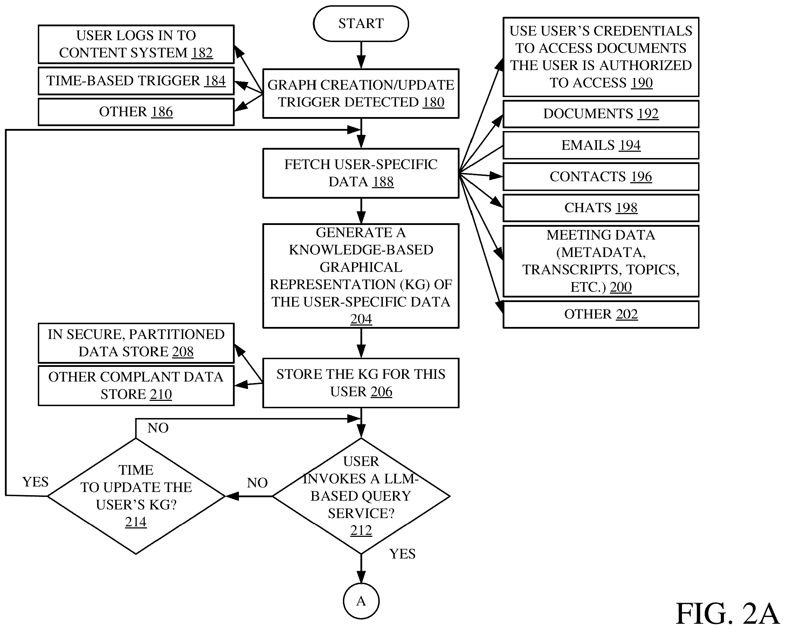

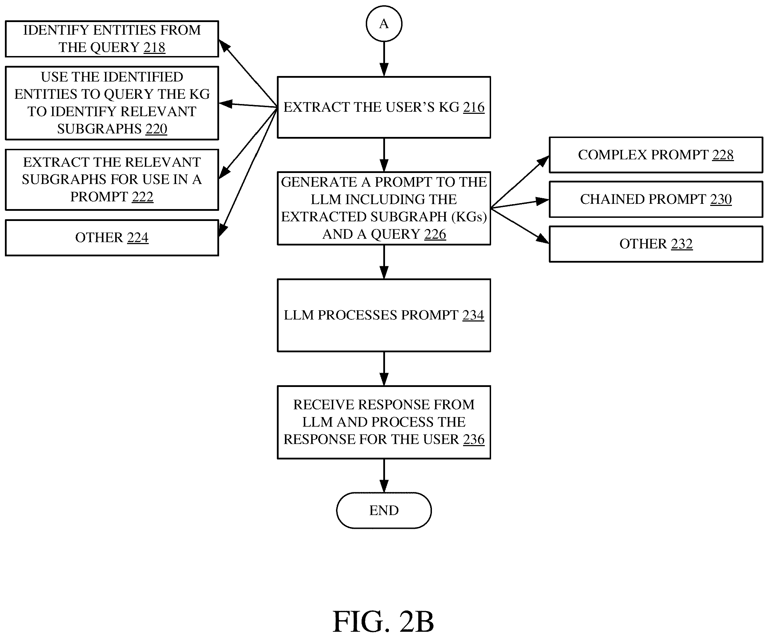

FIGS. 2A and 2B (collectively referred to herein as FIG. 2) show a flow diagram illustrating one example of the operation of computing system architecture 100, in more detail. In the example shown in FIG. 2, it is first assumed that trigger detector 131 detects a graph creation/update trigger, as indicated by block 180 in the flow diagram of FIG. 2. The trigger criteria can be detected when user 118 logs into a content system used to generate and store content in one of user data sources 112-114. Detecting a trigger based upon user 118 logging into a content system is indicated by block 182 in the flow diagram of FIG. 2. In another example, trigger detector 131 can detect time-based trigger criteria 184 so that the user-specific graphs 158 are updated intermittently based on time. The trigger criteria can be any of a wide variety of other trigger criteria 186 as well.

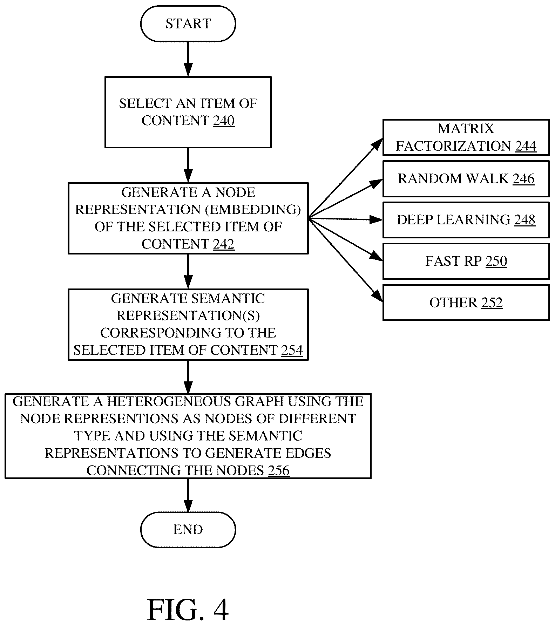

Data accessing system 132 then accesses user-specific data in user data sources 112-114, as indicated by block 188 in the flow diagram of FIG. 2. In one example, once user 118 has logged into a content system, then data accessing system 132 uses the user login credentials to access all the documents and other user data that user 118 is authorized to access in that content system. Using the user's login credentials to access data is indicated by block 190 in the flow diagram of FIG. 2. Data accessing system 132 may call application programming interfaces (APIs) on all data sources that user 118 has access to and retrieve items of data from those data sources for graph generation. The items of data can include documents 192, emails 194, contact records 196, chat threads 198, meeting data (such as meeting metadata - e.g., dates and times, etc., meeting transcripts, meeting topics, meeting organizers and recipients, among other meeting data 200), as well as a wide variety of other user-specific data and other enterprise data 202. KG generation system 126 then generates a knowledge-based graphical representation (KG) of the user-specific data and/or other enterprise data, as indicated by block 204 in the flow diagram of FIG. 2. One example of generating a KG based upon the accessed data is described in greater detail below with respect to FIG. 4.

Graph generator 138 outputs the user-specific KGs 158 for storage in data store 110. Storing the KGs for this user in data store 110 is indicated by block 206 in the flow diagram of FIG. 2. In one example, the user-specific KGs are stored in a secure, partitioned data store, as indicated by block 208, or in another compliant data store, as indicated by block 210. Until user 118 invokes LLM service 108 by submitting a query 120 (as determined at block 212 in the flow diagram of FIG. 2) processing continues with trigger detector 131 detecting trigger criteria indicating that the user's KGs should be generated or updated again, as determined at block 214 in the flow diagram of FIG. 2. If it is time to update the user's KGs (e.g., trigger detector 131 detects a trigger), then processing reverts to block 188 where the user's data is again fetched and KGs are generated or updated based upon that data. If, at block 214, no update trigger as been detected, then processing continues at block 212 where the system waits for either an update trigger to be detected or for the user to submit a query 120 to LLM service 108.

When user 118 interacts with interfaces 116 to submit a query 120 through user query service 104 to large language model service 108, graph fetching system 142 fetches the relevant subgraph portions of user-specific KGs 158 for user 118, based upon the query 120. Extracting the user's KGs or subgraphs is indicated by block 216 in the flow diagram of FIG. 2. In one example, entity detector 150 detects the entities in query 120 (such as the nouns, noun phrases, etc.) as indicated by block 218. Using the identified entities, graph identification system 152 queries data store 110 to identify subgraphs of the user-specific KGs 158 that are relevant to those entities. Identifying the relevant subgraphs is indicated by block 220. Relevancy may be determined in a wide variety of different ways, such as based on a similarity between the entities in query 120 and the nodes or semantic relations in the subgraphs, or in other ways. Once the relevant subgraphs are identified by subgraph identification system 152, subgraph extraction system 154 extracts the relevant subgraphs and provides them to prompt generator 144 for use in prompt 162. Extracting the relevant subgraphs from data store 140 for use in a prompt 162 is indicated by block 222 in the flow diagram of FIG. 2. The relevant subgraphs can be extracted in other ways as well, as indicated by block 224 in the flow diagram of FIG. 2.

Prompt generator 144 generates prompt 162 including the extracted KGs (or subgraphs), along with a representation of query 120. Generating the prompt with the user's subgraphs, as context for the query is indicated by block 226 in the flow diagram of FIG. 2. In one example, prompt 162 is a complex prompt including not only the query, but all of the relevant subgraphs, as indicated by block 228. In another example, the prompt 162 is provided as a chained prompt so that each prompt includes a smaller set of the query 120 or context information (e.g., the subgraphs or KGs 164). Providing the prompt as a chained prompt is indicated by block 230 in the flow diagram of FIG. 2. The prompt to the LLM service 108 can be generated in other ways as well, as indicated by block 232. To generate a chained prompt, the query 120 can be broken into a plurality of smaller, simpler queries. The particular subgraphs that are relevant to each of the smaller, simpler queries can be provided as context for that smaller, simpler query.

LLM service 108 then processes the prompt and provides response 166. Processing the prompt is indicated by block 234 in the flow diagram of FIG. 2. Response processing 146 receives response 166 and processes that response to provide an output to user query service 104 in response to query 120. Receiving the response from the LLM service 108 and processing the response for surfacing to user 118 is indicated by block 236 in the flow diagram of FIG. 2.

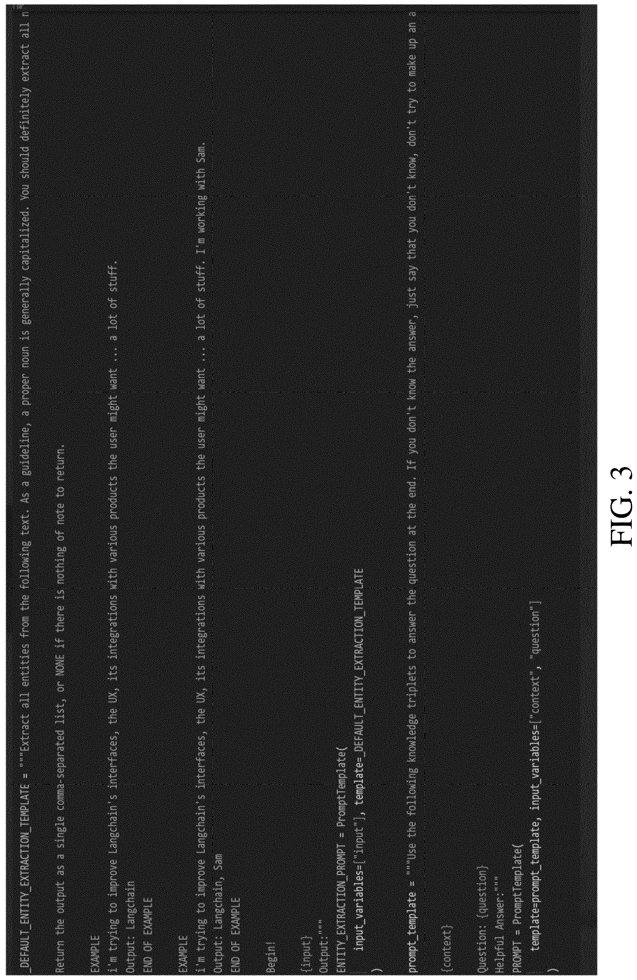

FIG. 3 shows one example of using an LLM as entity detector 150 to identify the entities in query 120. FIG. 4 also shows an example of generating a prompt 162, including the extracted KGs or subgraphs 164. It can be seen, for instance, that the text in FIG. 4 instructs an LLM to return a single, comma-separated list of entities identified in a text, such as query 120. Those entities can also be used to query data store 110 for the relevant portions or user-specific KGs 158. The subgraphs can be represented by the semantic triples, or in other ways, and may represent context to the query (or question) submitted by user 118. Thus, the subgraphs are provided as context to the query 120 in prompt 162.

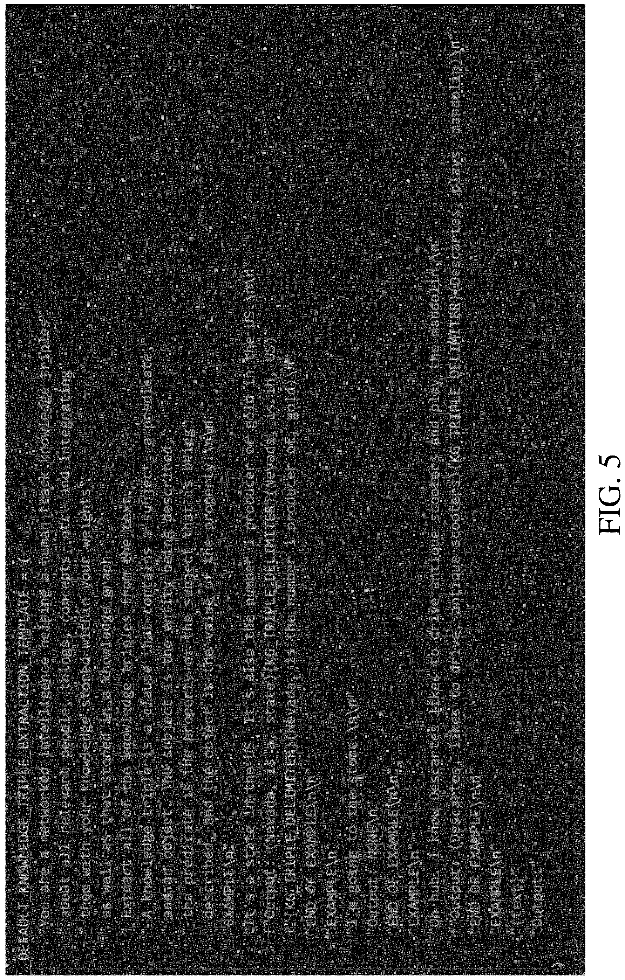

FIG. 4 is a flow diagram illustrating one example of KG generation system 126 in generating user-specific KGs 158 for a user. It is assumed that user 118 has logged into a content system so that KG generation system 126 has access to one or more user data sources 112-114. Data accessing system 132 first selects an item of content for processing in generating the KGs for this user 118. Selecting an item of content is indicated by block 240 in the flow diagram of FIG. 4. Again, the item of content may be a sentence, a document, an email, a chat message or message thread, a contact record, a meeting record, etc. Embedding generator 136 generates a node representation (or embedding) corresponding to the selected item of content, as indicated by block 242. The embedding can be generated using matric factorization 244, random walks 246, a deep learning algorithm 248, a FastRP algorithm 250, or other algorithm or mechanism 252. Semantic representation generator 134 also generates one or more semantic representations corresponding to the selected item of content, as indicated by block 254 in the flow diagram of FIG. 4. For instance, semantic representation generator 134 may, itself, be an LLM that generates the semantic triples discussed above. FIG. 5 shows one example of a prompt that can be submitted to an LLM requesting the LLM to extract semantic triples from a data item.

Graph generator 138 then generates a heterogeneous graph using the node representations as nodes of different node types (e.g., email, document, meeting, contact, chat, etc.) and using the semantic representations to generate edges connecting the nodes. Generating the heterogeneous graph is indicated by block 256 in the flow diagram of FIG. 4. Graph generator 138 may be an LLM which takes, as an input, the semantic triples and the node representations and generates edges between the node representations based upon the semantic triples.

It can thus be seen that the present description describes a system which greatly enhances the accuracy and reliability in using an LLM to respond to queries from a user about enterprise data. The present system accesses user-specific data and generates user-specific KGs based on that data and stores those user-specific KGs in a compliant data store, thus enhancing security. The present system also extracts the user-specific KGs and adds them, as context information, to the query in order to prompt an LLM service to process the query. The present system has been demonstrated to show greatly increased accuracy and reliability in answering such queries. Similarly, the present system greatly reduces the cost of training an LLM to answer user-specific queries.

It will be noted that the above discussion has described a variety of different systems, components, detectors, generators, and/or logic. It will be appreciated that such systems, components, detectors, generators, and/or logic can be comprised of hardware items (such as processors and associated memory, or other processing components, some of which are described below) that perform the functions associated with those systems, components, detectors, generators, and/or logic. In addition, the systems, components, detectors, generators, and/or logic can be comprised of software that is loaded into a memory and is subsequently executed by a processor or server, or other computing component, as described below. The systems, components, detectors, generators, and/or logic can also be comprised of different combinations of hardware, software, firmware, etc., some examples of which are described below. These are only some examples of different structures that can be used to form the systems, components, detectors, generators, and/or logic described above. Other structures can be used as well.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface displays (UI) have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays them has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

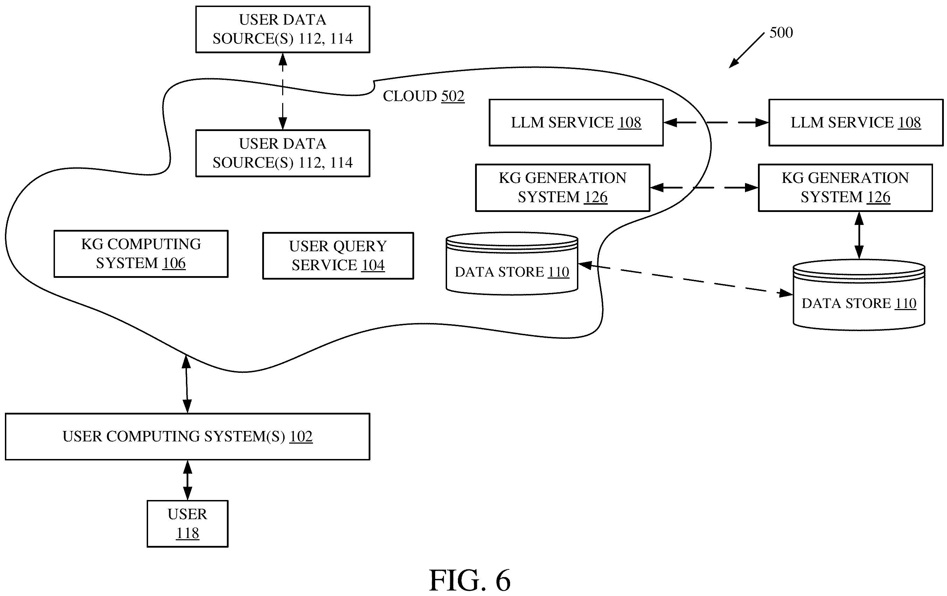

FIG. 6 is a block diagram of architecture 100, shown in FIG. 1, except that its elements are disposed in a cloud computing architecture 500. Cloud computing provides computation, software, data access, and storage services that do not require end-user knowledge of the physical location or configuration of the system that delivers the services. In various examples, cloud computing delivers the services over a wide area network, such as the internet, using appropriate protocols. For instance, cloud computing providers deliver applications over a wide area network and they can be accessed through a web browser or any other computing component. Software or components of architecture 100 as well as the corresponding data, can be stored on servers at a remote location. The computing resources in a cloud computing environment can be consolidated at a remote data center location or they can be dispersed. Cloud computing infrastructures can deliver services through shared data centers, even though they appear as a single point of access for the user. Thus, the components and functions described herein can be provided from a service provider at a remote location using a cloud computing architecture. Alternatively, the components and functions can be provided from a conventional server, or they can be installed on client devices directly, or in other ways.

The description is intended to include both public cloud computing and private cloud computing. Cloud computing (both public and private) provides substantially seamless pooling of resources, as well as a reduced need to manage and configure underlying hardware infrastructure.

A public cloud is managed by a vendor and typically supports multiple consumers using the same infrastructure. Also, a public cloud, as opposed to a private cloud, can free up the end users from managing the hardware. A private cloud may be managed by the organization itself and the infrastructure is typically not shared with other organizations. The organization still maintains the hardware to some extent, such as installations and repairs, etc.

In the example shown in FIG. 6, some items are similar to those shown in FIG. 1 and they are similarly numbered. FIG. 6 specifically shows that systems 106, 126, data sources 112, 114, services 104, 108, and data store 110 can be located in cloud 502 (which can be public, private, or a combination where portions are public while others are private). Therefore, user 118 accesses those systems through cloud 502.

FIG. 6 also depicts another example of a cloud architecture. FIG. 6 shows that it is also contemplated that some elements of architecture 102 can be disposed in cloud 502 while others are not. By way of example, data store 110, system 126, service 108, data sources 112, 114, and/or other items can be disposed outside of cloud 502, and accessed through cloud 502. Regardless of where the items are located, the items can be accessed directly by device 504, through a network (either a wide area network or a local area network), the items can be hosted at a remote site by a service, or the items can be provided as a service through a cloud or accessed by a connection service that resides in the cloud. All of these architectures are contemplated herein.

It will also be noted that architecture 100, or portions of it, can be disposed on a wide variety of different devices. Some of those devices include servers, desktop computers, laptop computers, tablet computers, or other mobile devices, such as palm top computers, cell phones, smart phones, multimedia players, personal digital assistants, etc.

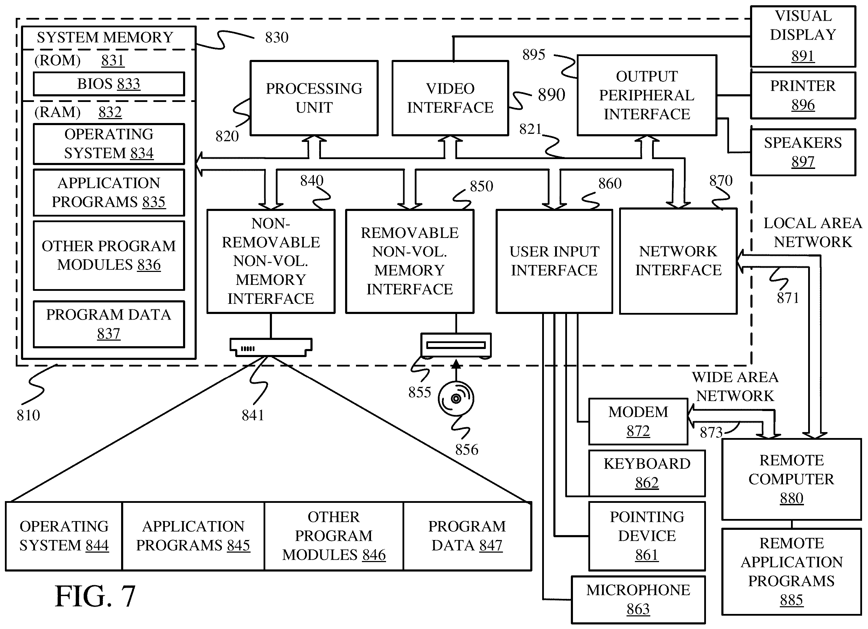

FIG. 7 is one example of a computing environment in which architecture 100, or parts of it, (for example) can be deployed. With reference to FIG. 7, an example system for implementing some embodiments includes a computing device in the form of a computer 810, programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus. Memory and programs described with respect to previous FIGS. can be deployed in corresponding portions of FIG. 7.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media typically embodies computer readable instructions, data structures, program modules or other data in a transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 7 illustrates operating system 834, application programs 835, other program modules 836, and program data 837.

The computer 810 may also include other removable/non-removable volatile/nonvolatile computer storage media. By way of example only, FIG. 7 illustrates a hard disk drive 841 that reads from or writes to non-removable, nonvolatile magnetic media, and an optical disk drive 855 that reads from or writes to a removable, nonvolatile optical disk 856 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The drives and their associated computer storage media discussed above and illustrated in FIG. 7, provide storage of computer readable instructions, data structures, program modules and other data for the computer 810. In FIG. 7, for example, hard disk drive 841 is illustrated as storing operating system 844, application programs 845, other program modules 846, and program data 847. Note that these components can either be the same as or different from operating system 834, application programs 835, other program modules 836, and program data 837. Operating system 844, application programs 845, other program modules 846, and program data 847 are given different numbers here to illustrate that, at a minimum, they are different copies.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures, such as a parallel port, game port or a universal serial bus (USB). A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections to one or more remote computers, such as a remote computer 880. The remote computer 880 may be a personal computer, a hand-held device, a server, a router, a network PC, a peer device or other common network node, and typically includes many or all of the elements described above relative to the computer 810. The logical connections depicted in FIG. 7 include a local area network (LAN) 871 and a wide area network (WAN) 873, but may also include other networks. Such networking environments are commonplace in offices, enterprise-wide computer networks, intranets and the Internet.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. The modem 872, which may be internal or external, may be connected to the system bus 821 via the user input interface 860, or other appropriate mechanism. In a networked environment, program modules depicted relative to the computer 810, or portions thereof, may be stored in the remote memory storage device. By way of example, and not limitation, FIG. 7 illustrates remote application programs 885 as residing on remote computer 880. It will be appreciated that the network connections shown are exemplary and other means of establishing a communications link between the computers may be used.

It should also be noted that the different examples described herein can be combined in different ways. That is, parts of one or more examples can be combined with parts of one or more other examples. All of this is contemplated herein.

Example 1 is a computer implemented method, comprising:
receiving a user query for a generative artificial intelligence (AI) system;
identifying a portion of a user-specific knowledge-based graph (user-specific KG) based on the user query;
generating a prompt for the generative AI system including a representation of the user query and the identified portion of the user-specific KG;
sending the prompt to the generative AI system;
receiving a response to the prompt from the generative AI system; and
providing a response to the user query based on the response to the prompt.

Example 2 is the computer implemented method of any or all previous examples wherein identifying a portion of a user-specific KG based on the user query comprises:
identifying content elements in the user query; and
identifying subgraph portions of the user-specific KG that are relevant to the user query based on the content elements of the user query.

Example 3 is the computer implemented method of any or all previous examples wherein identifying content elements in the user query comprises identifying entities in the user query and wherein identifying subgraph portions of the user-specific KG comprises:
identifying the subgraph portions of the user-specific KG that are relevant to the user query based on the entities in the user query.

Example 4 is the computer implemented method of any or all previous examples wherein generating a prompt comprises:
generating a complex prompt including the representation of the user query and the subgraph portions of the user-specific KG.

Example 5 is the computer implemented method of any or all previous examples wherein generating a prompt comprises:
generating a set of chained prompts, the chained prompts including the representation of the user query and the subgraph portions of the user-specific KG.

Example 6 is the computer implemented method of any or all previous examples and further comprising:
accessing user data;
generating the user-specific KG based on the user data; and
storing the user-specific KG in a data store.

Example 7 is the computer implemented method of any or all previous examples wherein accessing user data comprises:
detecting that the user has logged in to a content system using a set of user credentials; and
accessing user data available to the user based on the user credentials.

Example 8 is the computer implemented method of any or all previous examples wherein generating the user-specific KG comprises:
selecting a content item from the user data;
generating an embedding of the content item as a representation of the content item; and
identifying semantic relations in the content item.

Example 9 is the computer implemented method of any or all previous examples wherein generating the user-specific KG comprises:
generating a graph with the embeddings as nodes in the graph; and
generating edges in the graph, connecting the nodes, based on the identified semantic relations.

Example 10 is the computer implemented method of any or all previous examples wherein identifying semantic relations in the content items comprises:
parsing the content item to generate semantic triples of a form comprising subject-predicate-object based on information in the content item.

Example 11 is the computer implemented method of any or all previous examples and further comprising:
detecting an intermittent trigger;
accessing user data based on the detected trigger;
updating the user-specific KG based on the user data; and
storing the updated user-specific KG in a data store.

Example 12 is a computer system, comprising:
at least one processor;
a knowledge-based graph (KG) generation system, implemented by that at least one processor, configured to access user data and generate a user-specific KG based on the user data;
a query processing system, implemented by the at least one processor, configured to receive a user query for a generative artificial intelligence (AI) system, identify a portion of the user-specific KG based on the user query, and generate a prompt for the generative AI system including a representation of the user query and the identified portion of the user-specific KG; and
a response processor configured to receive a response to the prompt from the generative AI system and provide a response to the user query based on the response to the prompt.

Example 13 is the computer system of any or all previous examples wherein the query processing system comprises:
an entity detector configured to identify content elements in the user query; and
a subgraph identification system configured to identify subgraph portions of the user-specific KG that are relevant to the user query based on the content elements of the user query.

Example 14 is the computer system of any or all previous examples wherein the query processing system comprises:
a prompt generator configured to generate a complex prompt including the representation of the user query and the subgraph portions of the user-specific KG.

Example 15 is the computer system of any or all previous examples wherein the query processing system comprises:
a prompt generator configured to generate a set of chained prompts, the chained prompts including the representation of the user query and the subgraph portions of the user-specific KG.

Example 16 is the computer system of any or all previous examples wherein the KG generation system comprises:
an embedding generator configured to select a content item from the user data and generate an embedding of the content item as a representation of the content item; and
a semantic representation generator configured to identify semantic relations in the content item.

Example 17 is the computer system of any or all previous examples wherein the KG generation system comprises:
a graph generator configured to generate a graph with the embeddings as nodes in the graph and to generate edges in the graph, connecting the nodes, based on the identified semantic relations.

Example 18 is the computer system of any or all previous examples wherein the semantic representation generator is configured to generate semantic triples of a form comprising subject-predicate-object based on information in the content item.

Example 19 is a method, comprising:
receiving a user query for a large language model (LLM);
identifying a portion of a user-specific graph of enterprise data based on the user query; and
prompting the LLM based on the user query and the identified portion of the user-specific graph.

Example 20 is the method of any or all previous examples and further comprising:
intermittently accessing a document in enterprise data;
generating an embedding corresponding to the document;
generating a semantic representation based on the document; and
updating the user-specific graph of enterprise data defining a node in the user-specific graph based on the embedding and defining a link in the user-specific graph based on the semantic representation.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer implemented method, comprising:
receiving a user query for a generative artificial intelligence, AI, system;
identifying a portion of a user-specific knowledge-based graph, user-specific KG, based on the user query;
generating a prompt for the generative AI system including a representation of the user query and the identified portion of the user-specific KG;
sending the prompt to the generative AI system;
receiving a response to the prompt from the generative AI system; and providing a response to the user query based on the response to the prompt.

2. The computer implemented method of claim 1 wherein identifying a portion of a user-specific KG based on the user query comprises:
identifying content elements in the user query; and
identifying subgraph portions of the user-specific KG that are relevant to the user query based on the content elements of the user query.

3. The computer implemented method of any of claims 1 and 2 wherein identifying content elements in the user query comprises identifying entities in the user query and wherein identifying subgraph portions of the user-specific KG comprises:
identifying the subgraph portions of the user-specific KG that are relevant to the user query based on the entities in the user query.

4. The computer implemented method of any of claims 1-3 wherein generating a prompt comprises:
generating a complex prompt including the representation of the user query and the subgraph portions of the user-specific KG.

5. The computer implemented method of any of claims 1-3 wherein generating a prompt comprises:
generating a set of chained prompts, the chained prompts including the representation of the user query and the subgraph portions of the user-specific KG.

6. The computer implemented method of claims 1-5 and further comprising:
accessing user data;
generating the user-specific KG based on the user data; and
storing the user-specific KG in a data store.

7. The computer implemented method of claim 6 wherein accessing user data comprises:
detecting that the user has logged in to a content system using a set of user credentials; and
accessing user data available to the user based on the user credentials.

8. The computer implemented method of any of claims 6-7 wherein generating the user-specific KG comprises:
selecting a content item from the user data;
generating an embedding of the content item as a representation of the content item; and
identifying semantic relations in the content item.

9. The computer implemented method of claim 8 wherein generating the user-specific KG comprises:
generating a graph with the embeddings as nodes in the graph; and
generating edges in the graph, connecting the nodes, based on the identified semantic relations.

10. The computer implemented method of any of claims 8 and 9 wherein identifying semantic relations in the content items comprises:
parsing the content item to generate semantic triples of a form comprising subject-predicate-object based on information in the content item.

11. The computer implemented method of any of claims 1-10 and further comprising:
detecting an intermittent trigger;
accessing user data based on the detected trigger;
updating the user-specific KG based on the user data; and
storing the updated user-specific KG in a data store.

12. A computer system, comprising:
at least one processor;
a knowledge-based graph, KG, generation system, implemented by that at least one processor, configured to access user data and generate a user-specific KG based on the user data;
a query processing system, implemented by the at least one processor, configured to receive a user query for a generative artificial intelligence, AI, system, identify a portion of the user-specific KG based on the user query, and generate a prompt for the generative AI system including a representation of the user query and the identified portion of the user-specific KG; and
a response processor configured to receive a response to the prompt from the generative AI system and provide a response to the user query based on the response to the prompt.

13. The computer system of claim 12 wherein the query processing system comprises:
an entity detector configured to identify content elements in the user query; and
a subgraph identification system configured to identify subgraph portions of the user-specific KG that are relevant to the user query based on the content elements of the user query.

14. The computer system of claim 12 or 13 wherein the query processing system comprises:
a prompt generator configured to generate a complex prompt including the representation of the user query and the subgraph portions of the user-specific KG.

15. The computer system of any of claims 12-14, wherein the query processing system comprises:
a prompt generator configured to generate a set of chained prompts, the chained prompts including the representation of the user query and the subgraph portions of the user-specific KG.
